# EUROPEAN PATENT APPLICATION

(11) **EP 1 555 552 A2**
(43) Date of publication of application: **20.07.2005**
(21) Application number: 04027641.2
(22) Date of filing: 22.11.2004
(51) Int. Cl.: G02B 6/13, G02B 6/122, G02F 1/00

(54) **Device comprising a photonic-crystal structure**

(30) Priority: 26.11.2003 IT TO20030947
(71) Applicant: C.R.F. Società Consortile per Azioni, 10043 Orbassano (TO) (IT)
(72) Inventor: Pizzi, Marco, 10153 Torino (IT); Doskolovich, Leonid, Strada Torino 50 10043 Orbassano Torino (IT)
(74) Representative: Notaro, Giancarlo

(57) **Abstract**

A device (D) which can be used in combination with a source of electromagnetic waves comprises a photonic-crystal structure (1) formed by an orderly and periodic series of nanoparticles (2) made of a material which is deformable following upon application of an external stress, preferably a piezoelectric material. The deformation of the nanoparticles (2) is designed to bring about change in the optical characteristics of the structure (1), by modulating its period such as the intensity of the reflected and transmitted beams and the direction of the transmitted beam.

## Description

The present invention relates to a device comprising a photonic-crystal structure.

The theory that underlies photonic crystals originates from the works of Yablonovitch and results in the possibility of providing materials with characteristics such as to affect the properties of photons, just as semiconductor crystals affect the properties of electrons.

Yablonovitch demonstrated in 1987 that materials the structures of which present a periodic variation in the refractive index can modify drastically the nature of the photonic modes within them. This observation has opened up new perspectives in the field of control and manipulation of the properties of transmission and emission of light by matter.

In greater detail, the electrons that move in a semiconductor crystal are affected by a periodic potential generated by the interaction with the nuclei of the atoms that constitute the crystal itself. This interaction results in the formation of a series of allowed energy bands, separated by forbidden energy bands (band gaps).

A similar phenomenon occurs in the case of photons in photonic crystals, which are generally constituted by blocks made of transparent dielectric material containing an orderly series of micro-cavities in which there is air or some other medium having an index of refraction very different from that of the host matrix is entrapped. The contrast between the indices of refraction causes confinement of photons with given wavelengths within the cavities of the photonic crystal. The confinement by which the photons (or the electromagnetic waves) are affected on account of the contrast between the refractive indices of the porous matrix and of the cavities results in the formation of regions of allowed energies, separated by regions of forbidden energies. The latter are referred to as photonic band gaps (PBGs). From this fact there follow the two fundamental properties of photonic crystals:
i) by selecting appropriately the dimensions, the distance between the cavities, and the difference between the refractive indices, it is possible to prevent propagation and spontaneous emission of photons of given wavelengths;
ii) as in the case of semiconductors, where there are present dopant impurities within the photonic band gap, it is possible to create allowed energy levels.

In regard to point i), it is known that electromagnetic waves, which in the vacuum propagate at the speed of light, assume different speeds when they traverse two media having different refractive indices. When an electromagnetic wave passes from one medium with a given refractive index to another having a different refractive index, the fraction of incident ray not reflected by the interface is deviated by a given angle with respect to the direction of incidence of the ray on the interface.

As long as the refractive index of the medium on which the light impinges is smaller than that in which the light is refracted, refraction is always possible. If, instead, the refractive index of the medium in which the incident ray propagates is greater than that of the medium corresponding to the refracted ray, then, starting from a given angle, referred to as limit angle, there will no longer be a refracted ray, but only a reflected ray (referred to as totally reflected ray); this phenomenon goes by the name of total reflection.

For example, in the specific case of an optical fibre, light transmission is based precisely upon the phenomenon of total inner reflection, which occurs when light impinges in an oblique direction upon the interface between two media having different refractive indices, with an angle smaller than the critical angle. An optical fibre is precisely formed by two parts:. an inner part, which is referred to as core and is constituted by a very thin thread of vitreous material, and an outer part, which is referred to as cladding and is constituted by a further vitreous.material, having a refractive index smaller than that of the core.

Thanks to the characteristics referred to above, photonic crystals can be employed for the purposes of control of propagation and transport of light, where, on account of the presence of the photonic band gap, it is possible to inhibit propagation of certain given wavelengths in chosen directions. In this perspective, photonic crystals can be employed as wave guides for replacing traditional optical fibres. In fact, if a defect or a series of linear defects is introduced into a photonic crystal with a precise band gap, it is possible to enable a precise wavelength to propagate exclusively along the defect, in so far as, outside said defect, propagation is not allowed since said radiation would be reflected. In the case of an optical fibre with a two-dimensional photonic crystal, with periodicity along the axes X and Y, electromagnetic radiation can propagate along the direction Z where no periodicity is encountered. In the presence of a narrow angle, electromagnetic radiation having said frequency will be reflected by the walls of the fibre, where, on account of the periodicity, there is present a photonic band gap capable of not dispersing some wavelengths, by reflecting them.

Photonic-crystal optical fibres present the advantage, as compared to traditional optical fibres, of being able to transport light radiation even in the presence of narrow angles, where traditional optical fibres are affected by wide dispersions.

For a complete theoretical description of the behaviour of photonic crystals, including three-dimensional photonic crystals, there does not exist a simplified formulation, such as, for example, that of the effective refractive index.

To prevent any loss of generality, no mention will hence be made of said theories, but an example of simulation of a photonic-crystal structure obtained directly by applying Maxwell's equations will be provided, purely by way of illustration.

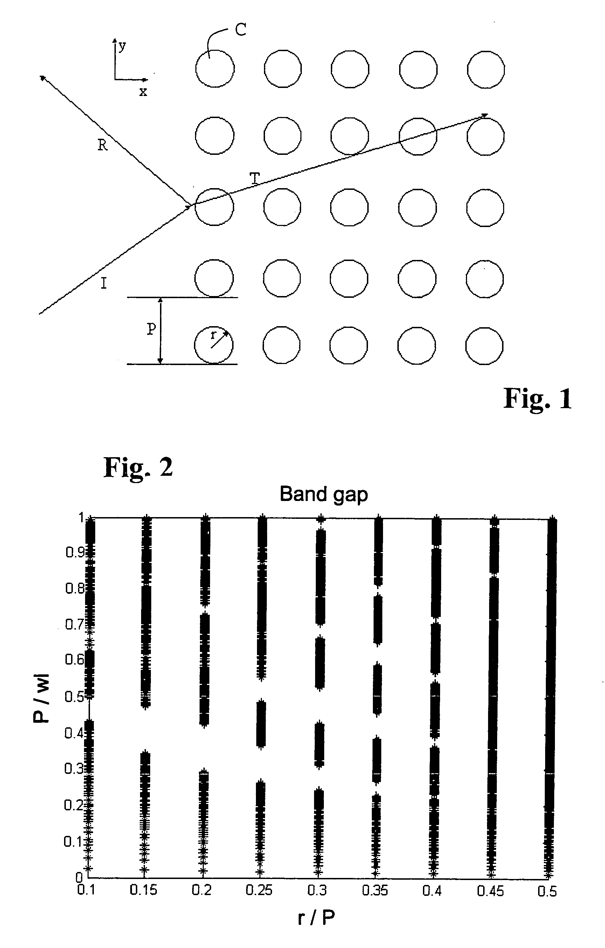

For this purpose, Figure 1 is a schematic representation of a cross section of a two-dimensional photonic crystal, the structure of which, having period P, is formed by columns C made of a material with relative dielectric constant equal to 11 in air in the TE case (i.e., electric field of the incident wave along z). The graph of Figure 2 gives the calculation of the photonic band gaps for the photonic crystal of Figure 1.

With reference to Figure 1, given a certain incident beam I having a wavelength *wl*, this will be split into a reflected part R and a transmitted part T. For some intervals of values of the ratio between the radius r of the columns C and the period P of the structure, some band gaps are formed, represented by the areas of interruption of the vertical traces represented in the graph of Figure 2. For these values of r/P and P/*wl*, the light is completely reflected for any angle of incidence. A variation in the ratio r/P can hence allow transmission of a part of the beam or its complete reflection.

Also in the case where there are no band gaps (for low values of the relative dielectric constant no band gap is formed), a variation of r or P or both leads in any case to a variation in the intensity of the reflected and transmitted beams and in the direction of the transmitted beam.

In the light of what has been set forth above, the purpose of the present invention is to indicate a new advantageous application of photonic crystals, in particular for the purposes of providing devices that can be used in combination with a source of electromagnetic waves.

The above purpose is achieved, according to the present invention, by a device having the characteristics specified in the annexed claims, which are to be understood as forming an integral part of the present description.

Further purposes, characteristics and advantages of the present invention will emerge clearly from the ensuing description and from the annexed drawings, which are provided purely by way of explanatory and non-limiting example and in which:
- Figure 1 is a schematic cross-sectional view of a two-dimensional photonic crystal, having a periodic structure formed by columns;
- Figure 2 is a graph giving the calculation of the photonic band gaps for the photonic crystal of Figure 1;
- Figure 3 is a schematic view of a photonic-crystal structure employed in a device according to the invention;
- Figure 4 is a schematic cross-sectional view of a first example of device made according to the invention;
- Figures 5 and 6 are schematic illustrations of a possible use of the device illustrated in Figure 4;
- Figures 7 and 8 are schematic perspective views, from longitudinally opposite sides, of a second example of a device according to the invention;
- Figure 9 is a schematic longitudinal section of the device represented in Figures 7 and 8;
- Figure 10 is a schematic view of a part of the device represented in Figures 7 and 8; and
- Figure 11 is a schematic vertical section of a third example of the device according to the invention.

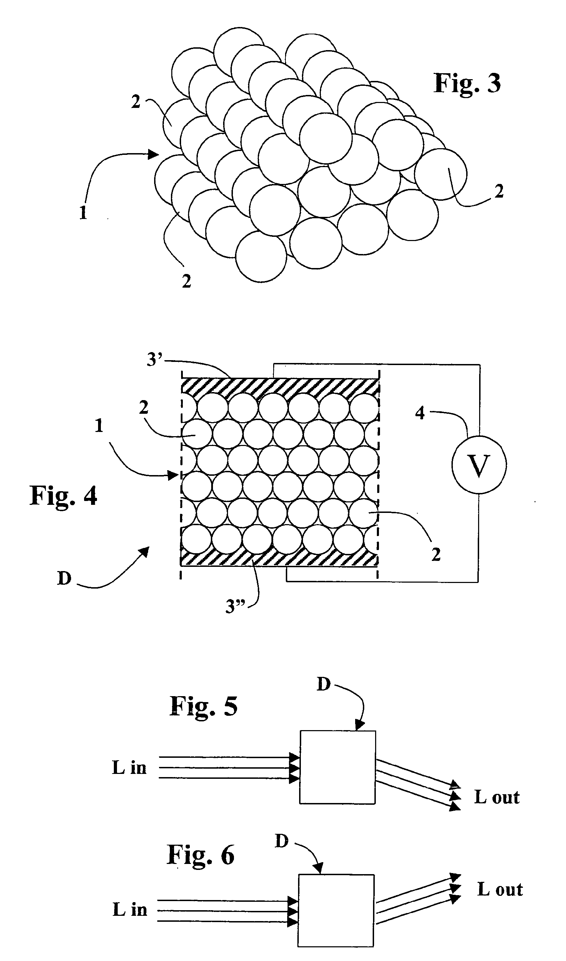

The device forming the subject of the present invention is based upon the use of a three-dimensional photonic crystal, designated as a whole by 1 in Figure 3, obtained starting from nanoparticles made of active material, i.e., a material which is deformable under the action of an external field or stress applied thereto. The first step in the fabrication of the device is hence the formation of the aforesaid nanoparticles, designated by 2, which are subsequently assembled in order to obtain a periodic structure, characterized by an orderly series of microcavities.

In the preferred embodiment of the invention, the nanoparticles 2 have a spherical shape. The nanospheres 2 made of active material are formed, for example, by means of known sol-gel techniques, and are then packed together, for example via forced sedimentation in a centrifuge.

As may be seen in Figure 3, the photonic crystal 1 hence appears as an opal, i.e., an orderly and periodic structure of densely packed nanospheres, between which there is defined an orderly and periodic series of microcavities, in which a medium, such as air, having a refractive index different from that of the material which constitutes the nanospheres themselves, is present.

In the preferred embodiment of the invention, the nanospheres 2 are made of a piezoelectric material. As is known, piezoelectricity is the capacity of some crystalline materials to manifest an electrical charge if they are subjected to mechanical stress, or else to undergo deformation if are subjected to an electric field. For the purposes of the implementation of the present invention, it is this latter effect that is exploited, known as reverse piezoelectric effect.

In order to provide the device forming the subject of the present invention, designated as a whole by D in Figure 4, there are deposited on the photonic crystal 1 obtained in the ways described above transparent electrodes appropriately positioned, designated as 3' and 3". The process is concluded by polarizing the material forming the nanospheres 2 and by connecting the electrodes to a voltage source 4.

By applying a potential difference to the crystal 1, across the electrodes 3', 3", it is possible to obtain a deformation of the nanospheres 2, exploiting the reverse piezoelectric effect. According to the modalities of use desired for the device D, the piezoelectric material can be chosen and polarized in such a way as to exploit one or the piezoelectric constants known as "d31" or "d33", in order to obtain, by means of application of the electric field, a deformation of the structure in a direction perpendicular or parallel, respectively, to that of the applied field.

The aforesaid deformation of the nanospheres 2 brings about a variation in the pitch/radius ratio of the lattice that characterizes the structure of the photonic crystal. On account the deformation enabled by the use of the piezoelectric material, it thus becomes possible to modulate the period of the structure of the photonic crystal 1.

A variation in the pitch of the lattice, which can be obtained, for instance, with piezoelectric materials of the relaxor type, can be used in applications such as:
- thin films for non-reflecting coatings;
- devices for increasing the extraction efficiency in electroluminescent devices;
- wave guides and optical fibres;
- antennas for cellphones for inhibiting propagation of electromagnetic waves (radio waves and microwaves) in the direction of the user's head; and
- high-efficiency light emitters.

In particular, the device D enables variation of the wavelength to which the aforesaid devices are sensitive (for example, variation of the colour of electroluminescent devices).

The device D according to the invention can moreover be used for obtaining special-purpose devices, such as, for example, variable mirrors for modulation and switching of signals in optical fibres, optical interconnection blocks with variable optical paths, displays, etc.

For this purpose, Figures 5 and 6 are schematic illustrations of the case of use of the device D as element for switching signals in optical fibres.

In the case of Figure 5, the light radiation "L in" coming from a first optical fibre (not represented) penetrates into the device D, in a condition in which no voltage is applied across the electrodes 3', 3". The outgoing radiation "L out" hence proceeds according to a given path, along a respective second optical fibre (not represented either).

Application of a voltage across the electrodes 3', 3" brings about, in the ways described above, a deformation of the nanospheres 2 and hence a variation in the optical characteristics of the crystal lattice 1, such as transmittance, reflectance and direction of the transmitted beam, so that the outgoing radiation "L out" will proceed according to a path different from the previous one, along a respective third optical fibre (not represented).

The electrodes 3', 3" can be appropriately associated to the crystal 1, with the purpose of modifying given areas of the crystal itself, introducing preferential optical paths, or else creating allowed bands in the PBG only where it is desired to obtain a propagation of light.

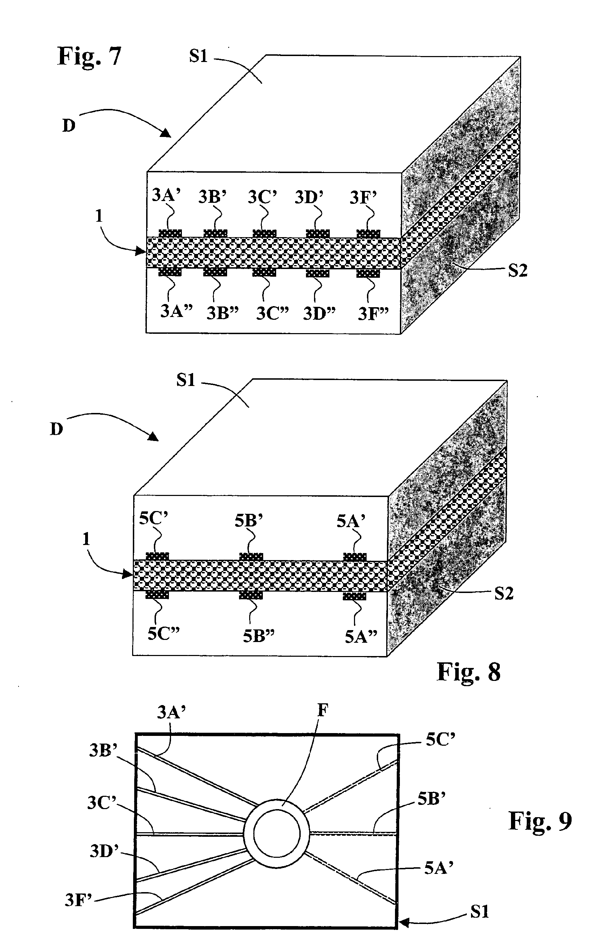

An example in this sense is provided by Figures 7 to 10, in which the device D is, in this case, an interconnection block with variable optical path.

The device D in this case comprises two optional supporting components S1, S2, between which there is set a photonic-crystal structure 1 made as described above. Associated to each component S1, S2 is, in the part in contact with the structure 1, a series of electrodes, substantially in the form of conductive paths.

As may be seen in Figure 7, in the case exemplified, electrodes are provided, designated by 3A' to 3F', arranged parallel to electrodes 3A" to 3F", which electrodes basically start from the front side of the device D and terminate in an area without band gap, designated by F in Figure 9, which is defined inside the structure 1. Starting from the area F are then second electrodes, designated by 5A' to 5C' and 5A" to 5C" in Figure 8, which are also arranged in parallel pairs and terminate at the rear side of the device D.

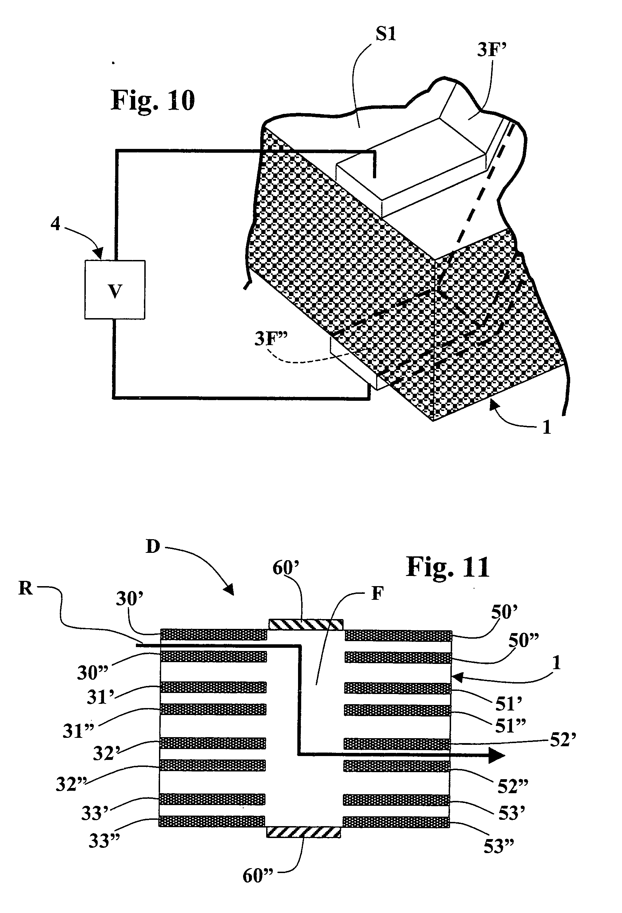

In the detail represented in Figure 10, illustrated schematically is an area of just the structure 1 of the device D of Figures 7 and 8, on the two opposite surfaces of which there operate the electrodes, in the case exemplified the pair of electrodes 3F', 3F". If a light beam is brought into the area of the structure 1 which extends between said two electrodes, in the absence of a voltage across the latter, the propagation of light radiation will be reflected, on account of the presence of the PBG.

Application of a voltage across the electrodes 3F', 3F", by means of a generator 4, enables a deformation of the portion of structure 1 which extends between the electrodes themselves. The effect of this is to introduce a defect inside the PBG structure, with the consequent possibility for the light radiation to propagate exclusively along the defect (as has been said, outside the defect propagation is not allowed since said radiation would be reflected on account of the band gap). Of course, what has been exemplified with reference to the electrodes 3F', 3F" applies to all the other pairs of electrodes 3A'-3A", 3B'-3B", 3C'-3C", 3D'-3D", 3E'-3E".

By following the path defined by the electrodes 3F', 3F", the light radiation can hence reach the area F, which, since it is without any band gap, enables complete transmission of the radiation. In a way similar to what has been explained above, by applying a voltage across a desired pair of electrodes 5A'-5A", 5B'-5B", 5C'-5C", it will be possible to select a desired path of the light radiation from the area F up to the output of the device D.

It should be noted that the area F could even be altogether similar to the remaining part of the structure 1, i.e., characterized by the presence of band gaps. In this case, also in that area there will be associated electrodes to the structure 1 so as to induce local deformation of the structure 1 itself, which is designed to enable passage of light.

In the embodiment exemplified in Figures 7 to 10, the device D is designed to guide selectively light radiation along optical paths that lie substantially on one and the same plane. In the case of Figure 11, there is, instead, represented a further example of a device according to the invention, which is provided for selectively directing radiation along paths that lie on different planes.

In the above implementation, in the crystal 1 there are appropriately embedded first pairs of electrodes 30'-30", 31'-31", 32'-32", 33'-33", aimed at defining incoming paths, and second pairs of electrodes 50'-50", 51'-51", 52'-52", 53'-53", aimed at defining outgoing paths. As may be readily understood, the aforesaid pairs of electrodes define in the structure 1 a number of superimposed paths, i.e., ones lying on different planes. In the embodiment of Figure 11, the area F extends in height within the structure 1 and is delimited at the respective longitudinal ends by respective electrodes 60', 60".

Also in this case, selective application of a voltage across:
- at least one pair of the electrodes of the aforesaid incoming paths;
- the electrodes 60', 60"; and
- at least one pair of the electrodes of the aforesaid outgoing paths
enables local deformations of the structure 1 to be obtained, and hence allowed bands to be created within the photonic band gap only where propagation of light is desired.

In the case exemplified in Figure 11, the application of a voltage across the pairs of electrodes 30'-30", 60'-60" and 52'-52" enables a ray of light R to be directed from an incoming path, which lies at a first height of the structure 1, as far as an outgoing path, which lies at a height lower than that of the incoming path. By so doing, there is evidently exploited the fact that the area F has also a photonic-crystal structure and is hence perfectly suitable to transporting light radiation even in the presence of narrow angles.

Of course, in the embodiment illustrated in Figure 11, there may be provided a number of paths at the level of each plane, according to what has been explained with reference to the embodiment illustrated in Figures 7 to 10.

It is clear that, for the person skilled in the art, numerous variants are possible of the device described herein by way of example, without thereby departing from the sphere of novelty inherent in the inventive idea underlying the present invention.

In a possible variant embodiment, the nanoparticles or nanospheres can be made of magnetostrictive material. As is known, the magnetostriction effect consists in the variation in shape and volume which ferromagnetic substances undergo during their magnetization. Also in this case, there may arise the reverse phenomenon, i.e., magnetization of a ferromagnetic material subjected to a process of deformation.

Consequently, in the application according to the invention, instead of the electrodes 3, there will be provided suitable means for subjecting the nanospheres 2 to a magnetic field, in order to obtain the desired variation in shape and volume thereof, and hence modulate the period of the photonic-crystal structure 1.

Likewise, there may be used active materials of the shape-memory type, and in this case deformation will be controlled by means of a variation in temperature.

The crystal 1 may be embedded in a deformable matrix, for example a polymer, in which case deformation of the structure can be obtained using the electrostrictive effect or with external mechanical means which compress the structure in the direction and in the points desired.

## Claims

1. A device which can be used in combination with a source of electromagnetic waves, comprising a photonic-crystal structure (1) having a periodicity along at least two axes, said structure (1) comprising two media having different refractive indices, and, in particular, a first medium defining an orderly and periodic series of cavities, in which the second medium is present, said device being **characterized in that** said structure (1) is at least partly formed by an orderly and periodic series of nanoparticles (2) made of a material which is deformable following upon application of an external stress and **in that** the device (D) comprises means (3'-3", 4; 3A'-3A", 3B'-3B", 3C'-3C", 3D'-3D", 3E'-3E", 3F'-3F", 4, 5A'-5A", 5B'-5B", 5C'-5C"; 30'-30", 31'-31", 32'-32", 33'-33", 50'-50", 51'-51", 52'-52", 53'-53", 60'-60") for applying said external stress to at least one area of said structure (1) in order to bring about a change in its optical characteristics following upon deformation of the respective nanoparticles (2).

2. The device according to Claim 1, **characterized in that** said deformation is such as to bring about a change in the periodicity of said area of the structure (1).

3. The device according to Claim 2, **characterized in that** said deformation is such as to bring about a change of pitch/radius ratio within said area of the structure (1).

4. The device according to Claim 1, **characterized in that** said nanoparticles (2) have a substantially spherical shape.

5. The device according to Claim 1, **characterized in that** said deformable material is a piezoelectric material, in particular of a relaxor type.

6. The device according to Claim 5, **characterized in that** said means comprise electrodes (3'-3"; 3A'-3A", 3B'-3B", 3C'-3C", 3D'-3D", 3E'-3E", 3F'-3F", 5A'-5A", 5B'-5B", 5C'-5C"; 30'-30", 31'-31", 32'-32", 33'-33", 50'-50", 51'-51", 52'-52", 53'-53", 60'-60"), in particular made of a transparent material, connected to a voltage source (4).

7. The device according to Claim 1, **characterized in that** said area extends between two electrodes (3'-3"; 3A'-3A", 3B'-3B", 3C'-3C", 3D'-3D", 3E'-3E", 3F'-3F", 5A'-5A", 5B'-5B", 5C'-5C"; 30'-30", 31'-31", 32'-32", 33'-33", 50'-50", 51'-51", 52'-52", 53'-53", 60'-60").

8. The device according to Claim 1, **characterized in that** said material is polarized.

9. The device according to Claim 1, **characterized in that** said deformable material is a magnetostrictive material.

10. The device according to Claim 9, **characterized in that** said means are operative for generating a magnetic field.

11. The device according to Claim 4, **characterized in that** said deformable material is a shape-memory material.

12. The device according to Claim 10, **characterized in that** said means are operative for generating a variation in temperature.

13. The device according to Claim 1, **characterized in that** said means are operative for generating a stress of a mechanical type.

14. The device according to Claim 1, **characterized in that** said means (3'-3", 4; 3A'-3A", 3B'-3B", 3C'-3C", 3D'-3D", 3E'-3E", 3F'-3F", 4, 5A'-5A", 5B'-5B", 5C'-5C"; 30'-30", 31'-31", 32'-32", 33'-33", 50'-50", 51'-51", 52'-52", 53'-53", 60'-60") are operative for modifying one or more given areas of said structure (1), in order to provide preferential optical paths that can be selectively activated, along which electromagnetic radiation can be guided.

15. The device according to Claim 14, **characterized in that** a plurality of said paths lie substantially on one and the same plane.

16. The device according to Claim 14, **characterized in that** a plurality of said paths lie on different planes, in particular set on top of one another.

17. Use of the device according to one or more of the preceding claims for varying the wavelength to which the following are sensitive:
- thin films for non-reflecting coatings;
- electroluminescent devices;
- wave guides and optical fibres;
- antennas for cellphones;
- high-efficiency light emitters.

18. Use of the device according to one or more of the preceding Claims 1 to 16 for making:
- variable mirrors for modulation and switching of signals in optical fibres;
- optical interconnection blocks with variable optical paths;
- displays.
